(19) Europäisches Patentamt
European Patent Office
Office européen des brevets

(11) **EP 1 027 911 B1**

(12) **EUROPÄISCHE PATENTSCHRIFT**

(45) Veröffentlichungstag und Bekanntmachung des Hinweises auf die Patenterteilung:
**18.08.2004 Patentblatt 2004/34**

(51) Int Cl.⁷: **B01D 3/10**, C22C 3/00, C22B 9/02

(21) Anmeldenummer: **99125076.2**

(22) Anmeldetag: **16.12.1999**

(54) **Verfahren und Vorrichtung zum Ausdampfen von Komponenten aus Mehrstoffgemischen und Mehrstoffsystemen**

Method and apparatus for removal of components from a mixture of components

Procédé et dispositif pour l'élimination des composants d'un mélange de composants

(84) Benannte Vertragsstaaten:
**AT BE DE FR GB**

(30) Priorität: **06.02.1999 DE 19904863**

(43) Veröffentlichungstag der Anmeldung:
**16.08.2000 Patentblatt 2000/33**

(73) Patentinhaber: **ALD Vacuum Technologies Aktiengesellschaft**
**63450 Hanau (DE)**

(72) Erfinder:
• **Raschke, Manfred, Dr.-Ing.**
**63579 Altenmittlau (DE)**

• **Goy, Wilfried, Dr.-Ing.**
**65451 Kelsterbach (DE)**
• **Hugo, Franz, Dipl.-Ing.**
**63743 Aschaffenburg (DE)**
• **Wanetzky, Erwin, Dipl.-Ing.**
**63538 Grosskrotzenburg (DE)**
• **Melber, Albrecht, Dr.-Ing.**
**64287 Darmstadt (DE)**

(74) Vertreter: **Zapfe, Hans, Dipl.-Ing.**
**Patentanwalt,**
**Postfach 20 01 51**
**63136 Heusenstamm (DE)**

(56) Entgegenhaltungen:
DE-A- 2 533 703        DE-A- 3 239 341

EP 1 027 911 B1

**Beschreibung**

Die Erfindung betrifft ein Verfahren zum Ausdampfen von vorgegebenen Komponenten aus anfänglichen Mehrstoffgemischen und Mehrstoffsystemen nach dem Oberbegriff des Patentanspruchs 1.

Das Reinigen von pastösen, fließfähigen, flüssigen oder durch Schmelzen verflüssigten Mehrstoffgemischen oder Mehrstoffsystemem durch Erhitzen im Vakuum und Ausdampfen von relativ niedriger siedenden Komponenten ist umso schwieriger, je dichter die Siedepunkte bei dem gegebenen Druck (spezifische Dampfdruckkurven der einzelnen Komponenten) beieinander liegen. Die Schwierigkeiten steigen noch weiter, wenn es um die Forderung nach sehr geringen Restgehalten der auszudampfenden Komponenten geht, also z.B. um Spurenelemente und/oder Spurenverbindungen, die den Verwendungszweck des gereinigten Materials in Frage stellen. Die Verwendungszwecke sind insbesondere auf den Gebieten der Elektronik (Halbleitertechnik) und der Optik (Linsenwerkstoffe) zu sehen, wobei unter dem Begriff Mehrstoffgemische und Mehrstoffsysteme auch Legierungen, Gläser, Schlämme etc. zu verstehen sind, also auch Mehrstoffgemische mit den Phasen fest/fest, fest/flüssig und flüssig/flüssig.

Solche Mehrstoffgemische und Mehrstoffsysteme können auch enthalten: Wasser, Kohlenwasserstoffe, Quecksilber, Schwefel, Zink, Kadmium, Natrium, Lithium, Kalzium, Antimon, Blei, Mangan, Selen und Tellur.

Um kurze Diffusionsweglängen zu den Phasengrenzflächen (z.B. Flüssigkeit/Dampf) in den ganz oder teilweise flüssigen Mehrstoffgemischen und Mehrstoffsystemen zu erhalten, ist es wünschenswert und bekannt, die Charge in Einzelportionen auf mehrere Etagen mit geringem Füllstand bzw. günstigem Verhältnis von Oberfläche zu Volumen, aufzuteilen, wie dies im Zusammenhang mit einer Widerstandsbeheizung in der DE 31 44 284 C2 beschrieben ist, die sich allerdings mit einem anderen Thema befaßt, nämlich mit der Versprödung von Hartmetallen aus der Zerspanungstechnik. Bei einer Etagenanordnung fehlt jedoch der Temperaturausgleich durch Konvektionsströmungen und/oder induktive Zwangsumwälzungen zwischen den Einzelportionen. Die Folge sind erhebliche axiale und radiale Temperaturdifferenzen zwischen den Einzelportionen bzw. Etagen und damit unterschiedliche Restgehalte an Verunreinigungen in den Einzelportionen, und zwar auch in radialer Richtung.

Durch die DE 31 44 284 und die DE 32 39 341, die durch eine innere Priorität miteinander verknüpft sind, sind sogenannte Haubenöfen bekannt, bei denen eine abhebbare Heizhaube auf einer Basisplatte ruht und einen Rezipienten umgibt, in dem Destillation- und Sublimationsvorgänge durchgeführt werden können. über die Werkstoffe der Haube, die innen mit einer Wärmedämmung belegt ist, und des Rezipienten, werden keine Angaben gemacht; der Rezipient besteht üblicherweise aus metallischen Werkstoffen, die für elektromagnetische Wechselfelder undurchdringbar sind, weil sie als "Faraday'sche Käfige" wirken. Die Heizvorrichtung ist keine Induktionsspule, sondern als Widerstandsheizung dargestellt und umgibt nicht den Rezipienten. Dadurch wird im Ringraum der Haube eine entsprechend hohe Temperatur erzeugt, wobei die Wärme durch Strahlung, Konvektion und/oder Wärmeleitung auf den Rezipienten übertragen wird. Dieser gibt seine Wärmeenergie wiederum durch Strahlung, Konvektion und/oder Wärmeleitung an den Tiegelstapel ab, in dem die Wärme wiederum durch Leitung verteilt wird. Dadurch entstehen von außen nach innen erhebliche Temperaturgradienten, überwiegend in radialen und axialen Richtungen. Ein Temperaturausgleich, z.B. beim Aufheizen, ist zeitraubend, und die Aufrechterhaltung eines Temperaturgleichgewichts ist schwierig, weil Verdampfungsvorgänge dem Behandlungsgut laufend Wärme entziehen.

Die Gleichmäßigkeit der Wärmeverteilung wird bei diesem Stand der Technik zusätzlich noch durch einen Gaskreislauf gestört, der über einen Kondensator (Kühler) durch Ringspalte zwischen den Tiegeln zirkuliert. Solange keine Induktionsspule verwendet wird, können weder die Tiegel noch deren Deckel noch ein hohler Stützkörper unter den Tiegeln als Suszeptoren wirken, da die Wirkung von Suszeptoren von elektrischen Wechselfeldern abhängt. Bei Suszeptoren mit Induktionsspulen entsteht die Wärmeentwicklung in deren Innern, vergleichbar mit einem Mikrowellenherd.

Wenn man mit einer analogen Konstruktion ein Verfahren zum induktiven Ausdampfen durchführen wollte, müßten folgende Konstruktions- und Verfahrensänderungen vorgenommen werden:

a) der Rezipient 3 müßte aus einem nichtmetallischen, für elektromagnetische Wellen durchlässigen Werkstoff bestehen,

b) die Heizeinrichtung müßte aus einer Induktionsspule bestehen,

c) die Induktionsspule müßte den Rezipienten konzentrisch umgeben und

d) der Gaskreislauf über den Kondensator müßte vermieden werden.

Damit wäre aber immer noch nicht das Problem gelöst, unerwünschte axiale Temperaturgradienten zu vermeiden oder auszugleichen.

Durch die DE 25 33 703 A1 ist ein Durchlaufverfahren zum Raffinieren von geschmolzenen Metallen bekannt, bei dem in einer Vakuumkammer übereinander zwei Ringtiegel (Teller) mit koaxialen Dampfdurchtrittsöffnungen und achsparallelen Schmelzekanälen angeordnet sind. Die Schmelze wird einem napfartigen Deckel mit einer Bodenöffnung zugeführt und fließt von hier durch den Tiegelstapel zu einem außerhalb der Vakuumkammer angeordneten Auffangbehälter, und der Dampf wird einem wiederum koaxialen Kondensator zugeführt. Zum Betrieb der Vorrichtung sind drei Induktionssysteme vorgesehen, nämlich eine Erhitzerspule und zwei diese umgebende Rotationsspulen, mit denen die Schmelze so in Drehung versetzt wird, daß sie an den Tiegelwänden aufsteigt und durch die achsparallelen Schmelzekanäle nach unten abfließen kann. Ein axialer Temperaturausgleich ist bei einem Durchlauferhitzer überhaupt nicht möglich, da die fließende Schmelze laufend weiter aufgeheizt wird. Er wäre selbst dann nicht möglich, wenn die Schmelzeportionen in den Tiegeln getrennt gehalten würden. Grund: Auch dann ist eine axiale Homogenisierung der Temperatur nicht möglich, da die Erhitzerspule sich nur zwischen dem oberen Rand des oberen Tiegels und dem Boden des unteren Tiegels erstreckt. Dies gilt auch für die axiale Erstreckung der beiden Rotationsspulen. Axiale Temperaturgradienten werden noch dadurch begünstigt, daß die Vakuumkammer selbst weder beheizt noch mit einer Wärmedämmung versehen ist. Deren Deckel und Boden sind ausgesprochene Wärmesenken. Außerdem ergibt sich bei solchen Durchlaufverfahren durch unterschiedliche Strömungswege ein Verweilzeitspektrum, so daß die einzelnen Volumenelemente unterschiedlichen Reinigungszeiten ausgesetzt sind und daher auch unterschiedlich intensiv gereinigt werden.

Bei einer Unterbringung der gesamten Charge in einem einzigen Tiegel läßt sich zwar durch Konvektionsströmungen und/oder induktive Zwangsumwälzungen in gewissem Umfange eine Homogenisierung von Temperatur und Zusammensetzung der Charge in axialer und radialer Richtung erreichen, jedoch setzen Konvektionsströmungen zunächst einmal Temperaturdifferenzen voraus, und in beiden Fällen entstehen bestimmte, torus-ähnliche Strömungsmuster, und einzelne Volumenelemente der Flüssigkeit befinden sich immer nur kurze Zeit in der Nähe der Phasengrenzfläche (Verdampfungsoberfläche), so daß im Mittel, bezogen auf die Chargenmenge erheblich lange Diffusionswege entstehen, worunter die Produktivität leidet. Beim Abkühlen "friert" die Schmelze nach und nach ein, und die Phasengrenze fest/flüssig schiebt bestimmte Verunreinigungen in den flüssigen Teil, die sogenannte Restschmelze, vor sich her und verursacht dadurch Gradienten an Verunreinigungen in dem schließlich erstarrenden Block. Die ist eine Folge der Wirkung des effektiven Verteilungskoeffizienten

$$k_{eff} = C_{fest} / C_{flüssig}.$$

Hierbei spielt wiederum die Ableitung der Erstarrungswärme über große Weglängen eine störende Rolle. Außerdem setzt auch die Wanderung der Phasengrenze Temperaturdifferenzen voraus.

Nun ist es üblich, solche Prozesse auch in Vakuumöfen durchzuführen, die einen zylindrischen Ofenmantel aus einem für Magnetfelder durchlässigen Werkstoff wie Quarz oder Kunststoff (glasfaserverstärkt) und eine außerhalb des Ofenmantels angeordnete Induktionsspule besitzen.

Nun ist es nicht in allen Fällen möglich, die Temperaturauswahl für eine fraktionierte Destillation aufgrund isolierter Betrachtungen der stoffspezifischen Gleichgewichts-Dampfdruckkurven zu treffen, da solche Verdampfungen unter "Nicht-Gleichgewichtsbedingungen" erfolgen. Die Verdampfung unter solchen Bedingungen stellt den typischen realen Fall dar, mit dem man es in der Praxis zu tun hat. Der Verdampfungsprozeß als Gesamtvorgang wird als ein Transport von Komponenten aus dem Volumen in die Dampfphase, ggf. in das Vakuum, in bestimmten Teil-schritten betrachtet, wobei sowohl der Gesamtvorgang als auch jeder einzelne Teilschritt durch bestimmte kinetische Parameter charakterisiert werden kann. Der erste Teilschritt ist der Transport der jeweiligen Komponente durch die Diffusionsgrenzschicht, und dieser Transport ist dem Konzentrationsgefälle in dieser Grenzschicht proporional. Der zweite Teilschritt ist die freie Verdampfung der jeweiligen Komponente an der Oberfläche, und diese Verdampfung ist der Konzentration der Komponente an der Oberfläche proportional.

Dabei üben jedoch die einzelnen Komponenten unterschiedliche Wechselwirkungen aufeinander aus, die die Werte aus den Gleichgewichts-Dampfdruckkurven gegeneinander verschieben. Bei Legierungen geschieht dies beispielsweise durch die Bildung intermetallischer Phasen. Diese Wechselwirkungen müssen und können jedoch experimentell bestimmt werden.

Hierzu wird auf das Buch von Kubaschewski/Evans "Metallurgische Thermochemie", 1959, VEB Verlag Technik Berlin, Seiten 53 bis 55, verwiesen, in denen sich die Autoren mit dem Begriff der "Aktivität" der in einer Lösung befindlichen Stoffe bzw. Komponenten befassen und auf Bindungs- bzw. Anziehungskräfte zwischen den Molekülen hinweisen, die überwunden werden müssen, bzw. auf Abstoßungskräfte, die genutzt werden können.

Die Einzelprobleme und ihre möglichen Lösungen und Wirkungen stehen sich daher diametral entgegen.

Der Erfindung liegt daher die Aufgabe zugrunde, ein Verfahren und eine Vorrichtung anzugeben, mit denen bei kurzen Diffusionsweglängen verbesserte Homogenitäten in der Temperaturausbildung in radialer und axialer Richtung möglich sind.

Die Lösung der gestellten Aufgabe erfolgt daher bei dem eingangs beschriebenen Verfahren erfindungsgemäß durch die Merkmale im Kennzeichen des Patentanspruchs 1.

Damit werden die Vorteile erreicht, daß kurze Diffusionsweglängen und große Homogenitäten in der Temperaturausbildung in radialer und axialer Richtung möglich sind, insbesondere, daß die axialen und radialen Temperaturdifferenzen zwischen den Einzelportionen bzw. Etagen äußerst gering sind, wodurch die Restgehalte an Verunreinigungen in den Einzelportionen minimiert werden können, und zwar auch in radialer Richtung.

Die Gewinnung der hochreinen Komponente kann dabei auf zwei alternativen Wegen erfolgen, nämlich dadurch, daß:

1. die vorgegebene(n) Komponente(n) in den Ringtiegeln zurückgehalten wird/werden, oder

2. die vorgegebene(n) Komponente(n) unabhängig von den anderen Komponenten in einem Kondensator aufgefangen wird/werden. In diesem Falle wird ein nicht bereits mit anderen Stoffen "belegter" Kondensator verwendet.

Die Erfindung betrifft auch eine Vorrichtung zum Ausdampfen von vorgegebenen Komponenten aus anfänglichen Mehrstoffgemischen und Mehrstoffsystemen nach dem Oberbegriff des Patentanspruchs 4.

Die Lösung der gestellten Aufgabe erfolgt daher bei der vorstehend beschriebenen Vorrichtung erfindungsgemäß durch die Merkmale im Kennzeichen des Patentanspruch 4.

Es ist dabei im Zuge weiterer Ausgestaltungen des Erfindungsgegenstandes besonders vorteilhaft, wenn - entweder einzeln oder in Kombination - :

* die Heizkörper als Hohlkörper ausgebildet sind und wenn deren Innenflächen mit einem Tiegeldeckel des obersten Ringstiegels und mit der Unterseite des untersten Ringtiegels in Sichtverbindung stehen,

* die Höhe des unteren Heizkörpers, die Höhe des Tiegeistapeis und die Höhe des oberen Heizkörpers sich wie 1 : (0,8 bis 2,0) : 1 verhalten,

* sich die Höhe des Tiegelstapels zu seinem Außendurchmesser wie 1 : (0,2 bis 1,5) verhält,

* die Heizkörper als Hohlzylinder ausgeführt sind,

* der oberste Heizkörper nach oben hin durch eine Wärmedämmeinrichtung abgeschlossen ist,

* der unterste Heizkörper auf einer Ringscheibe aus einem Suszeptormaterial aufsitzt, die ihrerseits auf einer hohlzylindrischen Wärmedämmeinrichtung angeordnet ist,

* die Induktionsspule aus einem wendelförmigen Metallband besteht und wenn ihr Querschnitt in der Mitte der axialen Länge der Induktionsspule größer ist als an den Enden der Induktionsspule,

* der Querschnitt der Induktionsspule ein Rechteck ist, wenn die Zwischenräume der Windungen auf der gesamten Länge des Metallbandes zumindest im wesentlichen gleich groß sind und wenn die längste Achse des Rechtecks achsparallel verläuft und in Spulenmitte ein Höchstmaß und an den Spulenenden je ein Kleinstmaß besitzt,

* die Induktionsspule aus einem Hohlprofil besteht,

* die Verhältnisse des Höchstmaßes zu den Kleinstmaßen zwischen 1,1 und 4,0 betragen,

* ein Dampfabzugsrohr von der Unterseite des untersten Ringtiegels durch die Ringscheibe und die Wärmedämmeinrichtung bis zu einem Kondensator geführt ist, und/oder

* der Ofenmantel aus einem Quarzrohr besteht, das auf seiner Innenseite mit einer Wärmedämmung aus einem Weichfilz ausgekleidet ist.

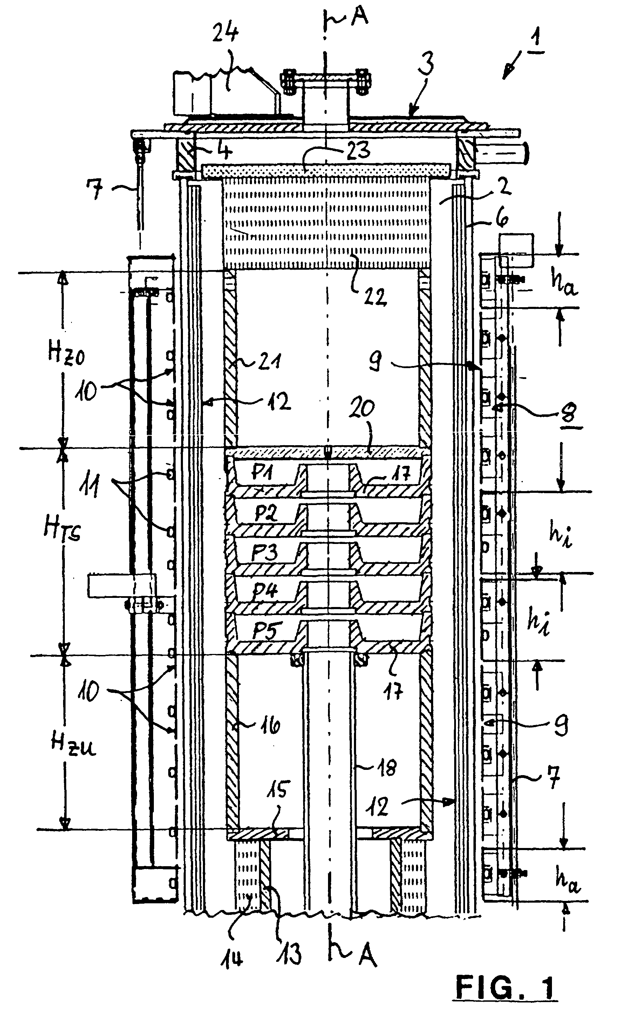

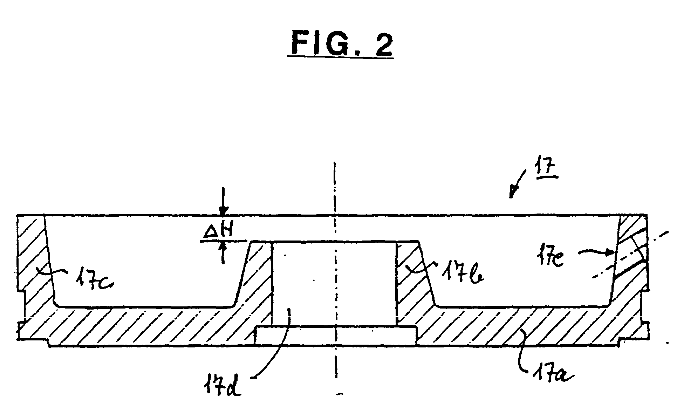

Ein Ausführungsbeispiel der Erfindung wird nachfolgend anhand der Figuren 1 und 2 näher erläutert.

Es zeigen:

Figur 1     einen vertikalen Axialschnitt durch den erfindungswesentlichen Teil einer Vorrichtung, nämlich durch einen Quarzrohrofen mit einer Etagenanordnung mehrerer Ringtiegel, und

Figur 2     einen vertikalen Axialschnitt durch einen einzelnen Ringtiegel.

In Figur 1 ist ein Quarzrohrofen 1 dargestellt, der eine Vakuumkammer 2 mit einer senkrechten Ofenachse A-A umschließt. Zwischen einem Chargierdeckel 3 und einem oberen Ringflansch 4 und einem nicht gezeigten unteren Ringflansch ist ein Ofenmantel 6 aus einem Quarzrohr mit einem Außendurchmesser von 700 mm mittels Zugankern 7 vakuumdicht eingespannt. Der Ofenmantel 6 ist außen koaxial von einer wendelförmigen Induktionsspule 8 umgeben, die aus einem Metallband aus Kupfer mit einem rechteckigen Querschnitt besteht, dessen längste Querschnittsachse parallel zur Ofenachse A-A verläuft.

Die Zwischenräume 9 zwischen den einzelnen Windungen 10 haben auf der gesamten Länge zumindest in Achsrichtung angenähert die gleiche Höhe. Die Höhenabmessungen der Rechtecke sind jedoch unterschiedlich, und zwar besitzen diese in Spulenmitte (innen) ein Höchstmaß "$h_i$" und an den Spulenende (außen) jeweils ein Kleinstmaß "$h_a$". Das Verhältnis von "$h_i$" zu "$h_a$" beträgt beispielhaft etwa 1,6. Dadurch wird eine Feld- und Energiekompensation im Bereich der sonst benachteiligten Spulenenden erreicht. Beim Betrieb ist die Induktionsspule 8 an einen Generator mit einer Frequenz von beispielhaft etwa 4000 Hz angeschlossen. Auf das Metallband ist außen eine Kühlschlange 11 aufgelötet.

Diese Spulendimensionierung stellt einen wesentlichen Beitrag im Rahmen einer besonders vorteilhaften Ausgestaltung der Erfindung dar. Hierzu wird folgendes ausgeführt: Die üblichen Induktionsspulen, ob mit oder ohne Veränderungen an den Spulenenden, einem sog. Steigungsausgleich, haben ein Maximum der Leistungsdichte im Bereich der Spulenmitte, weil etwa 30 % des elektromagnetischen Feldes den Spuleninnenraum durch die Zwischenräume zwischen den Endwindungen verlassen. Folglich befindet sich ohne besondere Maßnahmen das Maximum der Leistungsdichte und damit des axialen Temperaturprofils in der Spulenmitte, so daß sich die Temperaturen im Bereich der Endwindungen hiervon beträchtlich unterscheiden können.

Dies führt auch zu einer ungleichmäßigen Temperaturverteilung in erwärmten Festkörpern, z.B. in den Suszeptoren und den Chargenträgern, wobei festgehalten wird, daß unter dem Ausdruck "Suszeptor" jeder Körper bzw. jedes Material verstanden wird, der bzw. das an das elektromagnetische Feld ankoppelt, insbesondere aber Grafit, und zwar auch dann, wenn die Ankoppelung über einen sog. Skin-Effekt geschieht.

An den Spulenenden auftretende Temperaturgradienten stehen somit der Ausbildung eines homogenen Präzisions-Temperaturfeldes in axialer und radialer Richtung entgegen, das jedoch bei besonders empfindlichen Erwärmungsprozessen erforderlich ist, bei denen eine Charge in mehrere Einzelportionen in axial gestapelten Chargenträgern aufgeteilt ist, wenn in diesen Chargenträgern physikalisch-chemische Prozesse ablaufen sollen, deren Ergebnis eine reproduzierbare und ohne Chargeneffekte belastete Qualität des Endproduktes sein soll. Dieses Ziel, das letztenendes im Bereich aller Chargenträger (Ringtiegel) auf Abweichungen von weniger als ±5 K hinausläuft, wird durch die vorstehend beschriebene Spulengeometrie erheblich gefördert.

Die Innenfläche des Ofenmantels 6 ist mit einer Wärmedämmung 12 belegt, die aus mehreren Lagen eines Weichfilzes, beispielsweise aus Grafitfasern, besteht und zumindest nicht in nennenswertem Maße an die Induktionsspule 8 ankoppelt.

Soweit dies in Figur 1 dargestellt ist, sind in der Vakuumkammer 2 konzentrisch zur Ofenachse A-A - von unten nach oben - folgende Bauteile angeordnet: Ein Stützrohr 13 ist von einer hohlzylindrischen Wärmedämmeinrichtung 14 aus gewickeltem Grafitfilz umgeben. Darauf ruht eine Ringscheibe 15 aus Grafit und auf dieser wiederum ein hohlzylindrischer Heizkörper 16, gleichfalls aus Grafit. Auf diesem ruht ein Stapel aus fünf Ringtiegeln 17, die anhand von Figur 2 noch näher erläutert werden und einen Außendurchmesser von rund 500 mm besitzen.

In den einzelnen Ringtiegeln 17 des Tiegelstapels sind fünf Einzelportionen P1, P2, P3, P4 und P5 des anfänglichen Mehrstoffgemischs oder Mehrstoffsystems untergebracht. Die Zahl der Ringtiegel 17 kann jedoch variiert werden und vorteilhaft zwischen 2 und 10 liegen, wobei die Zahl der Ringtiegel jedoch nach oben hin nicht begrenzt ist.

Vom untersten Ringtiegel 17 führt eine Dampfabzugsleitung 18, gleichfalls aus Grafit, zu einem hier nicht gezeigten Kondensator, der jedoch demjenigen nach der eigangs genannten DE 31 44 284 C2 entsprechen kann.

Der oberste Ringtiegel 17 ist durch einen kongruenten Tiegeldeckel 20, gleichfalls aus Grafit, verschlossen. Auf diesem ruht wiederum ein hohlzylindrischer Heizkörper 21, gleichfalls aus Grafit, auf dem sich eine zylindrische Wärmedämmeinrichtung 22 aus gewickeltem Grafitfilz abstützt, auf der eine Scheibe 23 aus hartem Grafitfilz aufliegt.

Die Höhenverhältnisse der Heizkörper 16 (ZU) und 21 (ZO) und des Tiegelstapels (TS) betragen etwa $H_{ZU} : H_{TS} : H_{ZO} = 1 : 1,2 : 1$, wobei der Außendurchmesser des Tiegelstapels in etwa seiner Höhe $H_{TS}$ entspricht. Im dargestellten Längsschnitt gesehen, liegen also etwa quadratische Verhältnisse vor. Im Betriebszustand wirken die zylindrischen Innenflächen der Heizkörper 16 und 21 als sogenannte "Lambertsche Strahler" auf die Unterseite des untersten Ringtiegels 17 und auf den Tiegeldeckel 20 ein, da diese mit den besagten Innenflächen in Sichtverbindung stehen oder umgekehrt. Dabei spielt es auch keine Rolle, daß die Energiestrahlung aller Flächen nur mit Abweichungen dem Lambertschen Kosinusgesetz gehorchen, denn es stellt sich im Beharrungszustand ein Temperaturgleichgewicht ein, das durch die Wirkung der Wärmedämmeinrichtungen 14 und 22 unterstützt wird.

Auf den Tiegeldeckel 20 kann ggf. verzichtet werden, wenn anstelle des gezeichneten hohlzylindrischen Heizkörpers 21 ein geschlossener Heizkörper verwendet wird, was jedoch nicht näher dargestellt ist. Auch können die Heizkörper 16 und/oder 21 abweichende geometrische Formen aufweisen und mit Schlitzen oder Nuten sowie mit Einlagen erhöhter elektrischer Leitfähigkeit wie z.B. Heizdrähten versehen sein, wenn eine noch größere Gleichmäßigkeit in der Temperaturverteilung erforderlich ist.

Zum Chargieren wird eine Spannvorrichtung 24 für den Chargierdeckel 3 gelöst und dieser seitlich ausgeschwenkt. Der Stapel aus den Ringtiegeln 17 kann nunmehr nach oben entnommen werden. Die aus festem Grafit bestehenden Teile 15 bis 21 bilden einen Suszeptor, der an das elektromagnetische Feld der Induktionsspule 8 ankoppelt und dadurch die Heizenergie für den Schmelz- und Reinigungsprozeß liefert.

Figur 2 zeigt einen vertikalen Axialschnitt durch einen einzelnen Ringtiegel 17, der aus einer Ringscheibe 17a besteht, die - mit entsprechenden Böschungswinkeln - in eine Innenzarge 17b und eine Außenzarge 17c übergeht. Auf diese Weise läßt sich das erstarrte Endprodukt leicht aus dem Ringtiegel "stürzen". Die Innenzarge 17b hat eine geringere Höhe als die Außenzarge 17c. Die Höhendifferenz "ΔH" dient zum radialen Dampfaustritt zwischen den einzelnen Ringtiegeln 17 und zum Abströmen nach unten durch einen Dampfabzugskanal 17d und schließlich in das Dampfabzugsrohr 18. Die Ringtiegel 17 sind hochgradig verdichtet und poliert, so daß keine störenden Poren für die Ablagerung von Verunreinigungen gebildet werden. Eine schrägstehende Bohrung 17e dient zum höhenverstellbaren Einschrauben eines nicht gezeigten Thermoelements.

Bei der Reinigung einer Metallschmelze bei einer Temperatur um etwa 1000 °C wurden im Bereich der fünf Ringtiegel 17 mittels der Thermoelemente in überraschender Weise nur Temperaturabweichungen von weniger als ± 4 K gemessen, in Einzelfällen sogar von nur ± 2,5 K. In der Berührungsfläche zwischen dem Ofemantel 6 und der Wärmedämmung 12 wurden Temperaturen um etwa 300 °C gemessen. Diese Temperatur liegt tief genug, um einen aus Quarz bestehenden Ofenmantel gegen die Einflüsse bestimmter Elemente zuschützen. Unterhalb von 300 °C ist Quarz hinreichend stabil auch gegenüber ansonsten agressiven Elementen wie Aluminium, Kalzium, Cer-Mischmetall, Magnesium, und Schwefel.

Der Erfindungsgegenstand wird in der Weise betrieben, daß innerhalb bestimmter Zeitfenster der sich für jede Komponente ergebenden oder experimentell zu ermittelnden Dampfdruckkurven Programmvorgaben für das Hochfahren der Temperatur und sog. Haltestufen für das Ausdampfen und Kondensieren bestimmter Komponenten eingehalten werden. Hierzu wird auf die obigen Ausführungen zum Thema "Nicht-Gleichgewichtsbedingungen" und "Aktivität" verwiesen. Dabei kann das Produkt höchster Reinheit sowohl am Ende der Behandlung in den Ringtiegeln anfallen, als auch in einem Zwischenstadium in dem Kondensator, wenn hierfür ein entsprechend gereinigter Kondensator eingeschaltet wird.

Dabei können die einmal gefundenen Programmvorgaben in einer Datenverarbeitungseinrichtung mit einer automatischen Steuerung, beispielsweise einer SPS- oder PLC-Steuerung gespeichert und für die reproduzierbare Wiederholung beliebig oft abgerufen und ggf. auch prozeßspezifisch verändert und angepaßt werden.

Die Ringtiegel 17 müssen dabei nicht rotationssymmetrisch gestaltet sein, sondern die Innenzarge 17b und damit der Dampfabzugskanal 17d können auch exzentrisch im Tiegelboden angeordnet sein. Innerhalb des Tiegelstapels müssen die Dampfabzugskanäle 17d auch nicht miteinander fluchten, sie können von Etage zu Etage auch auf dem Umfang gegeneinander versetzt angeordnet werden, was jedoch zeichnerisch nicht dargestellt ist.

Bezugszeichenliste:

| 1 | Quarzrohrofen |
|---|---|
| 2 | Vakuumkammer |
| 3 | Chargierdeckel |
| 4 | Ringflansch |
| 6 | Ofenmantel |
| 7 | Zuganker |
| 8 | Induktionsspule |
| 9 | Zwischenräume |
| 10 | Windungen |
| 11 | Kühlschlange |
| 12 | Wärmedämmung |
| 13 | Stützrohr |
| 14 | Wärmedämmeinrichtung |
| 15 | Ringscheibe |
| 16 | Heizkörper |
| 17 | Ringtiegel |
| 17a | Ringscheibe |
| 17b | Innenzarge |
| 17c | Außenzarge |
| 17d | Dampfabzugskanal |
| 17e | Bohrung für Thermoelement |
| 18 | Dampfabzugsleitung |
| 20 | Tiegeldeckel |
| 21 | Heizkörper |
| 22 | Wärmedämmeinrichtung |
| 23 | Scheibe |
| 24 | Spannvorrichtung |

| A-A | Ofenachse |
|---|---|
| $h_a$ | Höhenabmessung Spulenende |
| $h_i$ | Höhenabmessung Spulenmitte |
| ΔH | Höhendifferenz |
| $H_{ZU}$ | Höhe des unteren Heizkörpers |
| $H_{TS}$ | Höhe des Tiegestapels |
| $H_{ZO}$ | Höhe des oberen Heizkörpers |

**Patentansprüche**

1. Verfahren zum Ausdampfen von vorgegebenen Komponenten aus anfänglichen Mehrstoffgemischen und Mehrstoffsystemem bei unteratmosphärischem Druck in einer Vakuumkammer (2), in der Einzelportionen (P1, P2, P3, P4, P5) des Mehrstoffgemischs oder Mehrstoffsystems in mehreren Etagen in Ringtiegeln (17) angeordnet sind, aus denen Dämpfe der jeweils niedriger siedenden Komponente(n) durch mindestens je eine Dampfabzugsöffnung abgezogen werden, wobei der oberste Ringtiegel (17) mit Ausnahme der Dampfabzugsöffnung verschlossen ist, wobei Ringtiegel (17) aus einem Werkstoff verwendet werden, der gegenüber elektromagnetischen Wechselfeldern als Suszeptor wirkt, und unter dem untersten Ringtiegel (17) und über dem obersten Ringtiegel (17) mindestens je ein Körper (16, 21) aus einem Werkstoff angeordnet wird, der gleichfalls gegenüber elektromagnetischen Wechselfeldern als Suszeptor wirkt, **dadurch gekennzeichnet, daß**

    a) die Ringtiegel (17) und die Körper (16, 21) in mindestens einer Induktionsspule (8) untergebracht sind und durch die induktive Ankoppelung derart aufgeheizt werden, daß der unterste Ringtiegel (17) und der oberste Ringtiegel (17) zusätzlich durch die als Heizkörper dienenden Körper (16, 21) beheizt werden, und daß

    b) die Ringtiegel (17) mit einer solchen Zeitvorgabe aufgeheizt werden, daß mindestens eine der vorgegebenen Komponenten des Mehrstoffgemischs oder Mehrstoffsystems in möglichst hoher Reinheit gewonnen wird.

2. Verfahren nach Anspruch 1, **dadurch gekennzeichnet, daß** die vorgegebene(n) Komponente(n) in den Ringtiegeln (17) zurückgehalten wird/werden.

3. Verfahren nach Anspruch 1, **dadurch gekennzeichnet, daß** die vorgegebene(/n) Komponente (n) unabhängig von den anderen Komponenten in einem Kondensator aufgefangen wird/werden.

4. Vorrichtung zum Ausdampfen von vorgegebenen Komponenten aus anfänglichen Mehrstoffgemischen und Mehrstoffsystemen bei unteratmosphärischen Druck mit einer Vakuumkammer (2) und einem Ofenmantel (6), in dem in mehreren Etagen Ringtiegel (17) angeordnet sind, die mindestens je einen Dampfabzugskanal (17d) aufweisen, wobei der oberste Ringtiegel (17) mit Ausnahme des Dampfabzugskanals (17d) abgeschlossen ist, und die Ringtiegel (17) aus einem Werkstoff bestehen, der gegenüber elektromagnetischen Wechselfeldern als Suszeptor wirkt, und unter dem untersten Ringtiegel (17) und über dem obersten Ringtiegel (17) mindestens je ein Körper (16, 21) aus einem Werkstoff angeordnet ist, der gleichfalls gegenüber elektromagnetischen Wechselfeldern als Suszeptor wirkt, **dadurch gekennzeichnet, daß**

    a) der Ofenmantel (6), die Ringtiegel (17) und die Körper (16, 21) von mindestens einer Induktionsspule (8) umgeben sind und daß

    b) der unterste Ringtiegel (17) und der oberste Ringtiegel (17) während des Betriebs der Vorrichtung im Wärmeaustausch mit den als Heizkörpern dienenden Körper (16, 21) stehen.

5. Vorrichtung nach Anspruch 4, **dadurch gekennzeichnet, daß** die Körper (16, 21) als Hohlkörper ausgebildet sind und daß deren Innenflächen mit einem Tiegeldeckel (20) des obersten Ringstiegels (17) und mit der Unterseite des untersten Ringtiegels (17) in Sichtverbindung stehen.

6. Vorrichtung nach Anspruch 4, **dadurch gekennzeichnet, daß** die Höhe ("$H_{ZU}$") des unteren Körpers (16), die Höhe ("$H_{TS}$") des Tiegel-stapels und die Höhe ("$H_{ZO}$") des oberen Körpers (21) sich wie 1 : (0,8 bis 2,0) : 1 verhalten.

7. Vorrichtung nach Anspruch 4, **dadurch gekennzeichnet, daß** sich die Höhe ("$H_{TS}$") des Tiegelstapels zu seinem Außendurchmesser wie 1 : (0,2 bis 1,5) verhält.

8. Vorrichtung nach Anspruch 5, **dadurch gekennzeichnet, daß** die Körper (16, 21) als Hohlzylinder ausgeführt sind.

9. Vorrichtung nach Anspruch 4, **dadurch gekennzeichnet, daß** der oberste Körper (21) nach oben hin durch eine Wärmedämmeinrichtung (22) abgeschlossen ist.

10. Vorrichtung nach Anspruch 4, **dadurch gekennzeichnet, daß** der unterste Körper (16) auf einer Ringscheibe (15) aus einem Suszeptormaterial aufsitzt, die ihrerseits auf einer hohlzylindrischen Wärmedämmeinrichtung (14) angeordnet ist.

11. Vorrichtung nach Anspruch 4, **dadurch gekennzeichnet, daß** die Induktionsspule (8) aus einem wendelförmigen Metallband besteht und daß ihr Querschnitt in der Mitte der axialen Länge der Induktionsspule (8) größer ist als an den Enden der Induktionsspule (8).

12. Vorrichtung nach Anspruch 11, **dadurch gekennzeichnet, daß** der Querschnitt der Induktionsspule (8) ein Rechteck ist, daß die Zwischenräume (9) der Windungen (10) auf der gesamten Länge des Metallbandes zumindest im wesentlichen gleich groß sind und daß die längste Achse des Rechtecks achsparallel verläuft und in Spulenmitte ein Höchstmaß ("$h_i$") und an den Spulenenden je ein Kleinstmaß ("$h_a$") besitzt.

13. Vorrichtung nach Anspruch 11, **dadurch gekennzeichnet, daß** die Induktionsspule (8) aus einem Hohlprofil besteht.

14. Vorrichtung nach Anspruch 12, **dadurch gekennzeichnet, daß** die Verhältnisse des Höchstmaßes ("$h_i$") zu den Kleinstmaßen ("$h_a$") zwischen 1,1 und 4,0 betragen.

15. Vorrichtung nach Anspruch 10, **dadurch gekenn-**

**zeichnet, daß** ein Dampfabzugsrohr (18) von der Unterseite des untersten Ringtiegels (17) durch die Ringscheibe (15) und die Wärmedämmeinrichtung (14) bis zu einem Kondensator geführt ist.

16. Vorrichtung nach Anspruch 4, **dadurch gekennzeichnet, daß** der Ofenmantel (6) aus einem Quarzrohr besteht, das auf seiner Innenseite mit einer Wärmedämmung (12) aus einem Weichfilz ausgekleidet ist.

## Claims

1. Method for the evaporation of specific components from initial multi-component mixtures and multi-component systems at below-atmospheric pressure in a vacuum chamber (2) in which individual portions (P1, P2, P3, P4, P5) of the multi-component mixture or multi-component system are disposed in annular crucibles (17) in a plurality of tiers from which vapours of the lower-boiling component (s) in each tier are extracted through at least one vapour-extraction opening in each tier, wherein the top crucible (17) is closed except for the vapour-extraction opening, crucibles (17) made from a material that acts as a susceptor in the presence of electromagnetic alternating fields are used, and bodies (16, 21) made from a material that likewise acts as a susceptor in the presence of electromagnetic alternating fields are arranged at least one under the bottom crucible (17) and at least one above the top crucible (17), **characterized in that**

   a) the crucibles (17) and bodies (16, 21) are accommodated in at least one induction coil (8) and are heated by inductive coupling so that the bottom crucible (17) and top crucible (17) are additionally heated by the bodies (16, 21) serving as heating elements, and **in that**
   b) crucibles (17) are heated for a set time such that at least one of the specific components of the multi-component mixture or multi-component system is extracted with extremely high purity.

2. Method according to Claim 1, **characterized in that** the specific component(s) is or are retained in the crucibles (17).

3. Method according to Claim 1, **characterized in that** the specific component(s) is or are trapped in a condenser independently of the other components.

4. Apparatus for the evaporation of specific components from initial multi-component mixtures and multi-component systems at below-atmospheric pressure with a vacuum chamber (2) and a furnace shell (6) in which annular crucibles (17) each having at least one vapour extraction passageway (17d) are disposed in a plurality of tiers, wherein the top crucible (17) is closed off except for the vapour-extraction passageway (17d), the crucibles (17) consist of a material that acts as a susceptor in the presence of electromagnetic alternating fields, and bodies (16, 21) made from a material that likewise acts as a susceptor in the presence of electromagnetic alternating fields are arranged at least one under the bottom crucible (17) and at least one above the top crucible (17),
**characterized in that**

   a) the furnace shell (6), crucibles (17) and bodies (16, 21) are surrounded by at least one induction coil (8), and **in that**
   b) during operation of the apparatus the bottom crucible (17) and the top crucible (17) are in heat exchange with the bodies (16, 21) serving as heating elements.

5. Apparatus according to Claim 4, **characterized in that** the bodies (16,21) are configured as hollow bodies and **in that** their internal surfaces are in visual communication with a lid (20) of the top crucible (17) and with the underside of the bottom crucible (17).

6. Apparatus according to Claim 4, **characterized in that** the height ("$H_{ZU}$") of the bottom body (16), the height ("$H_{TS}$") of the crucible stack and the height ("$H_{ZO}$") of the top body (21) are in proportions of 1 : (0.8 to 2.0) : 1.

7. Apparatus according to Claim 4, **characterized in that** the ratio of the height ("$H_{TS}$") of the crucible stack to its outer diameter is 1 : (0.2 to 1.5).

8. Apparatus according to Claim 5, **characterized in that** the bodies (16, 21) are designed as hollow cylinders.

9. Apparatus according to Claim 4, **characterized in that** the top body (21) is closed off at the top by a heat-insulating device (22).

10. Apparatus according to Claim 4, **characterized in that** the bottom body (16) is arranged on an annular disc (15) of susceptor material which is arranged in turn on a heat-insulating device (14) in the form of a hollow cylinder.

11. Apparatus according to Claim 4, **characterized in that** the induction coil (8) consists of a helical metal strip and **in that** its cross-section at the middle of the axial length of the induction coil (8) is larger than at the ends of the induction coil (8).

**12.** Apparatus according to Claim 11, **characterized in that** the cross-section of the induction coil (8) is a rectangle, **in that** the gaps (9) between the turns (10) are at least substantially of equal size over the whole length of the metal strip and **in that** the longest axis of the rectangle is parallel with the axis and has a maximum dimension ("$h_i$") at the middle of the coil and a minimum dimension ("$h_a$") at the ends of the coil.

**13.** Apparatus according to Claim 11, **characterized in that** the induction coil (8) consists of a hollow section.

**14.** Apparatus according to Claim 12, **characterized in that** the ratios of the maximum dimension ("$h_i$") to the minimum dimensions ("$h_a$") lie between 1.1 and 4.0.

**15.** Apparatus according to Claim 10, **characterized in that** a vapour-extraction pipe (18) leads from the underside of the bottom crucible (17) through the annular disc (15) and the heat insulating device (14) to a condenser.

**16.** Apparatus according to Claim 4, **characterized in that** the furnace shell (6) consists of a quartz tube internally clad with heat insulation (12) consisting of soft felt.

**Revendications**

**1.** Procédé pour évaporer des constituants prédéterminés issus de mélanges et systèmes complexes initiaux sous pression inférieure à la pression atmosphérique dans une chambre à vide (2) dans laquelle des fractions élémentaires (P1, P2, P3, P4, P5) du mélange complexe ou du système complexe sont disposées en plusieurs étages dans des creusets annulaires (17), d'où des vapeurs du ou des constituants à plus bas point d'ébullition sont extraites à travers au moins une ouverture d'extraction de vapeur respective, dans lequel le creuset (17) extrême supérieur est fermé à l'exception de l'ouverture d'extraction de vapeur, dans lequel on utilise des creusets annulaires (17) faits d'une matière qui se comporte comme un suscepteur vis-à-vis de champs électromagnétiques alternatifs et dans lequel, au-dessous du creuset annulaire (17) extrême inférieur et au-dessus du creuset annulaire (17) extrême supérieur, est disposé à chaque fois au moins un corps (16, 21) fait d'une matière qui se comporte de même comme un suscepteur vis-à-vis des champs magnétiques alternatifs, **caractérisé en ce que**

a) les creusets annulaires (17) et les corps (16, 21) sont placés dans au moins une bobine d'induction (8) et sont chauffés par le couplage inductif de telle manière que le creuset annulaire (17) extrême inférieur et le creuset annulaire (17) extrême supérieur soient chauffés en supplément par les corps (16, 21) qui servent de corps chauffants, et **en ce que**
b) les creusets annulaires (17) sont chauffés avec une consigne de temps telle qu'au moins un des constituants prédéterminés du mélange complexe ou du système complexe soit obtenu avec une pureté aussi grande que possible.

**2.** Procédé selon la revendication 1, **caractérisé en ce que** le ou les constituants prédéterminés est ou sont retenus dans les creusets annulaires (17).

**3.** Procédé selon la revendication 1, **caractérisé en ce que** le ou les constituants prédéterminés est ou sont capturés dans un condensateur indépendamment des autres constituants.

**4.** Dispositif pour évaporer des constituants prédéterminés issus de mélanges et systèmes complexes initiaux sous pression inférieure à la pression atmosphérique comprenant une chambre à vide (2) et une enceinte de four (6) dans laquelle sont disposés en plusieurs étages des creusets annulaires (17) qui présentent chacun au moins un canal d'extraction de vapeur (17d), dans lequel le creuset extrême (17) supérieur est fermé à l'exception du canal d'extraction de vapeur et les creusets annulaires (17) sont faits d'une matière qui se comporte comme un suscepteur vis-à-vis de champs électromagnétiques alternatifs et dans lequel, au-dessous du creuset annulaire (17) extrême inférieur et au-dessus du creuset annulaire (17) extrême supérieur, est disposé à chaque fois au moins un corps (16, 21) fait d'une matière qui se comporte de même comme un suscepteur vis-à-vis des champs magnétiques alternatifs, **caractérisé en ce que**

a) l'enceinte (6) du four, les creusets annulaires (17) et les corps (16, 21) sont entourés d'au moins une bobine d'induction (8) et **en ce que**,
b) pendant le fonctionnement du dispositif, le creuset annulaire (17) extrême inférieur et le creuset annulaire (17) extrême supérieur sont en relation d'échange de chaleur avec les corps (16, 21) qui servent de corps chauffants.

**5.** Dispositif selon la revendication 4, **caractérisé en ce que** les corps (16, 21) sont constitués par des corps creux et **en ce que** leurs surfaces internes sont en contact visuel avec un couvercle (20) du creuset annulaire (17) extrême supérieur et avec la face inférieure du creuset annulaire (17) extrême inférieur.

**6.** Dispositif selon la revendication 4, **caractérisé en ce que** la hauteur ("$H_{ZU}$") du corps inférieur (16), la hauteur ("$H_{TS}$") de la pile de creusets et la hauteur ($H_{ZO}$") du corps supérieur (21) sont entre elles dans le rapport de 1 : (0,8 à 2,0) : 1.

**7.** Dispositif selon la revendication 4, **caractérisé en ce que** la hauteur ("$H_{TS}$") de la pile de creusets et son diamètre extérieur sont entre eux dans le rapport de 1 : (0,2 à 1,5).

**8.** Dispositif selon la revendication 5, **caractérisé en ce que** les corps (16, 21) sont réalisés sous la forme de cylindres creux.

**9.** Dispositif selon la revendication 4, **caractérisé en ce que** le corps extrême supérieur (21) est fermé vers le haut par un dispositif d'isolation thermique (22).

**10.** Dispositif selon la revendication 4, **caractérisé en ce que** le corps extrême inférieur (16) repose sur un disque annulaire (15) fit d'un matériau suscepteur qui, de son côté, est disposé sur un dispositif isolant thermique (14) de forme cylindrique creuse.

**11.** Dispositif selon la revendication 4, **caractérisé en ce que** la bobine d'induction (8) est faite d'une bande métallique hélicoïdale et **en ce que** sa section est plus grande au milieu de la longueur axiale de la bobine d'induction (8) qu'aux extrémités de la bobine d'induction (8).

**12.** Dispositif selon la revendication 11, **caractérisé en ce que** la section de la bobine d'induction (8) est un rectangle, **en ce que** les espaces intermédiaires (9) des spires (10) sont au moins sensiblement aussi grands sur toute la longueur de la bande métallique et **en ce que** l'axe le plus long du rectangle s'étend parallèlement à l'axe et possède une dimension maximale ("$h_i$") au milieu de la bobine et une dimension minimale ("$h_a$") à chacune des extrémités de la bobine.

**13.** Dispositif selon la revendication 11, **caractérisé en ce que** la bobine d'induction (8) est constituée par un profilé creux.

**14.** Dispositif selon la revendication 12, **caractérisé en ce que** les rapports de la dimension maximale ("$h_i$") aux dimensions minimales ("$h_a$") valent entre 1,1 et 4,0.

**15.** Dispositif selon la revendication 10, **caractérisé en ce qu'**un tube d'extraction de vapeur (18) s'étend de la face inférieure du creuset annulaire (17) extrême inférieur jusqu'à un condensateur en traversant le disque annulaire (15) et le dispositif isolant thermique (14).

**16.** Dispositif selon la revendication 4, **caractérisé en ce que** l'enceinte (6) du four est constituée par un tube de quartz qui est revêtu sur sa face intérieure d'un isolant thermique (12) fait d'un feutre mou.

**FIG. 1**

# FIG. 2